# EUROPEAN PATENT SPECIFICATION

(11) **EP 3 513 565 B1**
(45) Date of publication and mention of the grant of the patent: **06.11.2024**
(21) Application number: 16790691.6
(22) Date of filing: 16.09.2016
(51) Int. Cl.: H04N 21/439, H04N 21/462, H04N 21/485, H04N 21/43

(54) **METHOD FOR PRODUCING AND PLAYING VIDEO AND MULTICHANNEL AUDIO CONTENT**
VERFAHREN ZUR PRODUKTION UND WIEDERGABUNG VON VIDEO UND MEHRKANAL-AUDIOINHALTEN
MÉTHODE POUR LA PRODUCTION ET LA REPRODUCTION DE CONTENU VIDÉO ET AUDIO MULTICANAL

(43) Date of publication of application: 24.07.2019
(73) Proprietor: Augmented Acoustics, 78830 Bonnelles (FR)
(72) Inventor: DUFOSSE, Stéphane, 78830 Bonnelles (FR); SAID, Laurent, 78130 Les Mureaux (FR)
(74) Representative: Fédit-Loriot
(86) International application number: PCT/IB2016/001485
(87) International publication number: WO 2018/051161

(56) References cited:
- WO-A1-2016/124865
- US-A1- 2014 328 485
- US-A1- 2016 231 981
- US-B1- 6 630 963

## Description

The invention generally relates to the field of multimedia, and morespecificallyto a method for producing and playing video and audio content.

### BACKGROUND OF THE INVENTION

Many live scenes, such as concerts, television shows, ballets, theatre plays, operas, sport events, are broadcasted for a distant audience to enjoy both watching and listening to the show.

As light and sound do not travel at the same speed through air, they are often captured separately by means, respectively, of cameras and microphones. Video and audio signal are therefore processed separately. The hardware used to capture video and audio is not the same; the processing tools and method differ as well.

As far as video is concerned, in case of an analog camera, the analog signal is first digitized, then encoded to be streamed and/or broadcasted. In case of a digital camera, the signal is directly encoded to be streamed and/or broadcasted. Whichever the camera technology, processing (mostly coding) the generated video signal requires a certain period of time (called latency) which needs to be taken into account when broadcasting.

As far as audio is concerned, the audio signal s generated by various microphones are generally gathered and processed by a master mixing table where in the signals undergo several operations such as:
- gaining (i.e. enhancing strength of the signal),
- filtering (in particular to suppress wind, environmental noise and echo, i.e. repetition of a same sound pattern captured by different microphones at different times, due to their different distance from the source),
- equalizing (i.e. moderating or amplifying some frequencies within a same signal),
- conditioning (i.e. adapting the sound level),
- mixing (i.e. putting together various signals to generate a single soundtrack)
- digitizing (i.e. converting a signal from analog to digital).

A mixing table outputs processed, mixed audio data (generally stereo) which is subsequently synchronized with corresponding processed video data to generate a primary audio/video signal suitable for broadcasting. Synchronization is often provided by means of timestamps embedded both in the audio and video signals in order for them to be played simultaneously on a display system and on a sound system, respectively.

Despite the richness of the initial signals and the capabilities of the processing devices, the signal provided to the audience is remarkably poor, in the sense that it includes far less information than the raw captured signal.

The audio signal, in particular, usually includes arbitrary mixing choices from the sound engineer who runs the mixing table; that leaves the listener with only few settings such as volume, balance, and, depending upon the capabilities of the sound system, equalizing.

It is an object of the invention to enhance a spectator's experience during the broadcasting of a show.

It is another object of the invention to enhance the spectator's audio experience during the broadcasting of the show.

It is a further object of the invention to provide the audience with an audio signal that they may adapt to their preferences with unusual setting parameters.

It is known in the prior art document WO2016/124865 A1 an appliance for receiving and reading audio signals, which includes:
a receiver of high-frequency electromagnetic waves designed to capture radio broadcast signals including a plurality of audio tracks; a wireless communication interface, separate from the receiver and designed to receive at least one regulating parameter to be applied to at least one audio track of the captured signal; and a digital signal processor designed to apply the regulating parameter to the audio track and produce a mixed signal.

Also, US6630963 discloses a television receiver that receives an A/V signal from an event including a primary audio signal, and also receives a secondary audio signal of the same event such as a radio broadcast. The receiver synchronizes the secondary signal to the video signal and output the video signal with the secondary audio signal instead of with the primary audio signal.

### SUMMARY OF THE INVENTION

- It is therefore provided, according to a first aspect, a method for producing and playing video and audio content, as defined in claim 1.

In a preferred embodiment, as defined in claim 2, the synchronizing step includes the operations of:
- achieving a temporal comparison between the multichannel audio data from the secondary signal and the mixed audio data extracted from the primary signal,
- subsequently determining a time delay between the multichannel audio data from the secondary signal and the mixed audio data extracted from the primary signal,
- temporally aligning the multichannel audio data from the secondary signal with the mixed audio data extracted from the primary signal according to the time delay.

Temporal comparison between the multichannel audio data from the secondary signal and the mixed audio data extracted from the primary audio/video signal may be achieved through a maximum likelihood estimation.

The method wherein the user managed conditioning settings are applied within a conditioning module and are obtained from a computerized user device, on which a virtual mixing table including virtual buttons for specifying a conditioning parameter for each channel of themultichannel audio data is displayed.

In a preferred embodiment, the userdevice provides the conditioning settings to the conditioning modulethrough a wireless link.

It is provided, according to a second aspect, as defined in claim 6, an audio/Video playerfor producing and playing video and audio content, including:
- a decoder module configured to:
   ∘ receive a primary, audio/video signal including video data and mixed audio data synchronized with the video data and
   ∘ extract the mixed audio data from the primary signal;
- a synchronizing module configured to
   ∘ receive a secondary, audio signal including multichannel audio data, the primary audio/video signal and the secondary audio signal having been captured from a show taking place in a scene, said primary audio/video signal and said secondary audio signal originating from a same recording source, and
   ∘ synchronize the multichannel audio data from the secondary signal with the mixed audio data extracted from the primary signal;
- a conditioning module configured to
   ∘ apply user managed conditioning settings to the synchronized multichannel audio data;
   ∘ produce a conditioned audio signal synchronized to the video signal and
   ∘ simultaneously play, on a display system, only the video data from the primary signal and, on a sound system, only the conditioned audio signal synchronized to the video data.

It is provided, according to a third aspect, an audio/video system including such an audio/video player, and a computerized user device providing the user managed conditioning settings, said computerized user device being implemented with a virtual mixing table including virtual buttons for specifying a conditioning parameter for each channel of the multichannelaudio data.

The user device is preferably in wireless communication with the audio/video player.

It is provided, according to a fourth aspect, an audio/video broadcasting network including:
- An audio/video player as presented hereinbefore;
- A primary, audio/video server, in network communication with the audio/video player and configured to:
   ∘ host the primary, audio/video signal and;
   ∘ stream the primary audio/video signal to the audio/video player;
- A secondary, audio server, separate from the primary server, in network communication with the audio/video player and configured to:
   ∘ host the secondary audio signal and;
   ∘ stream the secondary audio signal to the audio/video player.

In a preferred embodiment, the audio/video broadcasting network further includes a computerized user device as presented hereinbefore.

### BRIEF DESCRIPTION OF THE DRAWINGS

The above and further objects and advantages of the invention will become apparent from the detailed description of preferred embodiments, considered in conjunction with the accompanying drawings.

In the drawings:
**FIG.1** is as schematic view showing a studio configured to produceaudio and video data from picture and sound captured from a livescene;

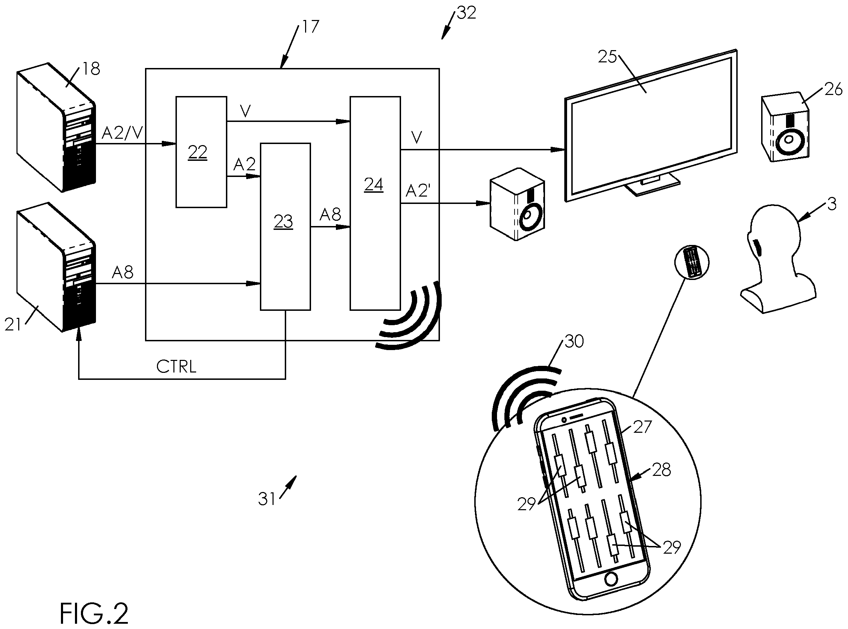

**FIG.2** is a schematic diagram of an audio/video broadcasting network configured to broadcast audio and video data produced by the studio of **FIG.1****.**

### DETAILED DESCRIPTION

The description of the present invention is made for an example of audio and video signals that come from a show, especially from live scenes. But the present invention doesn't exclude any other origin of audio and video signals, and is not limited to shows or live scenes.

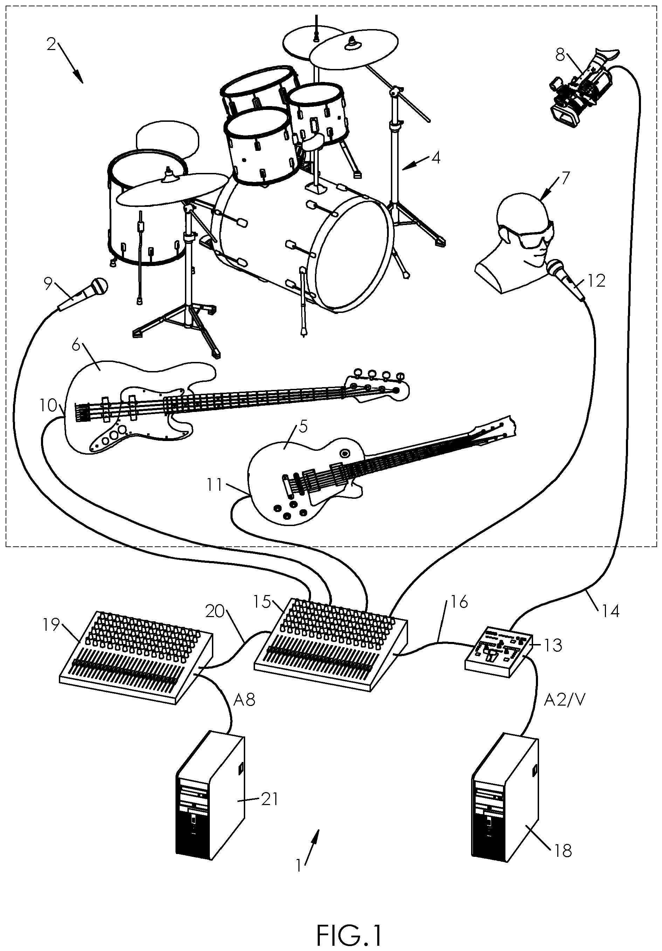

On **FIG.1** is partly represented a recording studio 1 for producing video and audio data from, respectively, images and sound captured from a show **2** to be broadcasted (preferably live, although the show **2** may be broadcasted with a delay) to a distant audience including one or more viewers **3** (where the word "viewer" means a person having both eyesight and audition capabilities).

The show **2** takes place in a location called "scene" although this term should be interpreted in the broadest meaning, i.e. it might designate a room, a stage, a studio, an arena, a stadium, a hall, or even an open space. The show **2** involves a plurality of image and sound sources, such as musical instruments (here a drum set **4,** a guitar **5,** a bass guitar **6),** actors and/or singers **7,** speakers, players, animals, such list being non-exhaustive.

As can be seen on **FIG.1****,** images from the show are captured by means of one or more cameras **8,** which may be of the analog or digital type, while sound from the show **2** is captured by means of several microphones **9, 10, 11, 12** preferably at least one for each source **4, 5, 6, 7.** One or more ambience microphones may be provided as well. For certain sources such as a drum set **4,** a plurality of microphones may be provided (e.g. one for each drum and/or for each cymbal).

Each camera **8** is connected to an audio/video mixing console **13** through a video link **14** which might be wired or wireless. The line linking the camera to the audio/video mixing console on **FIG.1** should be interpreted as representative of a wired or a wireless video link.

Images from the camera(s) **8** are timestamped, i.e. each image or group (or packet) of image is associated with a timestamp consisting ofa n incremental time information automatically generated by a clock, e.g. in HH:MM:SS format.

Each microphone **9-12** is connected to a master sound mixing console **15** through an audio link, which might be wired or wireless. The line linking each microphone **9, 10, 11, 12** to the master sound mixing console **15** on **FIG.1** should be interpreted as representative of a wired or a wireless audio link.

The number of microphones **9, 10, 11, 12** depicted on **FIG.1** should not be regarded as limitative. The number of microphones allowed on stage should be instead regarded as only limited by the number of tracks allowed to be connected to the master sound mixing console **15,** which may be equal to eight, twelve, twenty or even thirty-two (all those numbers non-limitative), depending upon the architecture or capabilities of the master sound mixing console **15.**

The master sound mixing console **15** is supposed to be managed by a sound engineer who is entitled to process the audio signal coming from the microphones **9, 10, 11, 12** using one or more processing functions such as gaining, filtering, equalizing conditioning, mixing, digitizing to produce and output a mixed, master sound which, in most cases, is a stereo sound.

The mixed, master sound is timestamped, i.e. successive soundtracks or packets of the mixed master sound are associated with respective timestamps each consisting of an incremental information automatically generated by a clock, e.g. in HH:MM:SS format.

As depicted on **FIG.1****,** the master sound mixing console **15** is linked to the audio/video mixing console **13** through an audio link **16** which might be wired or wireless. The line linking the master sound mixing console **15** to the audio/video mixing console **13** on **FIG.1** should be interpreted as representative of a wired or a wireless video link.

The images provided by the camera(s) **8** and the mixed, master sound are further processed within the audio/video mixing console **13** to produce a primary, audio/video signal **A2/V** including video data **V** and mixed audio data **A2** synchronized (through the use of timestamps) with each other.

The primary audio/video signal **A2/V** is then broadcasted to the audience's premises, and more precisely to an audio/video player **17** which is described in detail hereinafter.

This broadcasting of the primary audio/video **A2/V** signal is preferably achieved through a primary, audio/video server **18** in network communication with the audio/video player **17** and configured to hostthe
primary, audio/video signal **A2/V** and to stream the primary audio/video signal **A2/V** to the audio/video player **17.**

As depicted on **FIG.1****,** there is also provided in the studio **1** a slave sound mixing console **19** connected to the master sound mixing console **15,** through an audio link **20** which might be wired or wireless. The line linking the slave sound mixing console **19** to the master sound mixingconsole **15** on **FIG.1** should be interpreted as representative of a wiredor a wireless audio link.

The master mixing console **15** and the slave mixing console **19** are configured to respectively provide the slave sound mixing console **19** / receive from the master sound mixing console **15** a multichannel audiosignal. Should the multichannel audio signal be handed over by themaster sound mixing console **15** to the slave sound mixing console **19** through a single audio link **20,** all channels may be transferred by means of a time-division multiplexing technique. Should the signal be digital, the transfer might be achieved through packet transfer protocols (such as Internet Protocol or Real-time protocol).

The number of channels handed over to the slave sound mixing console **19** by the master sound mixing console **15** may be equal to the number of channels inputted in the master sound mixing console **15.** In certain show configurations, this number might be equal to the number of microphones **9, 10, 11, 12** (or sources **4, 5, 6, 7).** However, in case of a rock concert for example, where the drum set **4** is equipped with a series of microphones each linked to the master sound mixing console **15,** the latter might hand over to the slave mixing console **19** a single drum channel resulting from a sound mixing achieved on the master sound mixing console **15** with all tracks coming from the drum set **4.**

In one embodiment, the number of channels handed over to the slave sound mixing console **19** is equal to eight.

As the multichannel audio signal may have been conditioned at the master sound mixing console **15,** it is preferably further processed within the slave sound mixing console **19,** in order to apply predefined settings thereto, such as equalizing all channels to provide, in output, a secondary, audio signal including multichannel audio data **A8** to be broadcasted to the audience's premises.

As depicted on the drawings, the broadcasting of the secondary audio signal (or the multichannel audio data **A8)** is preferably achieved through a secondary, audio server **21,** separate from the primary audio/video server **18,** in network communication with the audio/video player **17** and configured to host the secondary audio signal (i.e. the multichannel audio data **A8)** and to stream this secondary audio signal to the audio/video player **17.**

The audio/video player **17** is configured to produce and play video and audio content. The audio/video **17** player may be in the form of a box, linked to the servers **18, 21** through a communication network such as a metropolitan area network (MAN) or even a wide area network (WAN), for example through Internet.

The audio/video player **17** includes a decoder module **22**configured to receive the primary audio/video signal **A2/V** from theprimary audio/video server **18** and to extract the mixed audio data **A2** from the primary audio/video signal **A2/V.** It should be noted that the extracted mixed audio data **A2** is timestamped (and thus might be played in synchronicity with the video data **V** from the primary audio/video signal).

The decoder module **22** may have the form of a computer chip of board, or it might have the form of a software module implemented on a shared processor.

The audio/video player **17** further includes a synchronizing module **23** configured to receive the multichannel audio signal **A8** from thesecondary audio server **21,** to receive the mixed audio data **A2** from thedecoder module **22** and to synchronize the multichannel audio data **A8** from the secondary signal with the mixed audio data **A2** extracted from the primary audio/video signal **A2/V.**

The synchronizing module **23** may have the form of a computer chip or board, or it might have the form of a software module implemented on a shared processor.

The synchronizing of the multichannel audio data **A8** with the mixed audio data **A2** may include the following operations:
- achieving a temporal comparison between the multichannel audio data **A8** and the mixed audio data **A2,**
- subsequently determining a time delay between the multichannel audio data **A8** and the mixed audio data **A2,**
- temporally aligning the multichannel audio data **A8** with the mixed audio data **A2** according to the time delay.

Temporal comparison between the multichannel audio data **A8** and the mixed audio data **A2** may be achieved through a maximum likelihood estimation.

For more details on audio signals synchronization, the skilled person may refer to the following documents, herewith incorporated by reference:
- M. Guggenberger et al, AudioAlign - Synchronization of A/V-Streams based on Audio Data, Institute of Information Technology, International Symposium on Multimedia, 2012;
- Cliford et al, Calculating time delays of multiple active sources in live sound, Audio Engineering Society, Convention Paper 8157, Nov. 2010;
- Clifford et al, Using Delay Estimation to Reduce Comb Filtering of Arbitrary Musical Sources, Center for Digital Music, in J. Audio Eng. Soc, Vol.61, No.11, Nov. 2013.

Alignment the multichannel audio data **A8** and the mixed audio data **A2** is achieved through control commands **CTRL** such as forward/back, applied to the multichannel audio data **A8** by the synchronizing module **22** back to the secondary audio server **21.**

The audio/video player **17** further includes a conditioning module **24** configured to:
- receive from the secondary audio server **21,** via the synchronizing module **23,** the multichannel audio data **A8** already synchronized to the mixed audio data **A2** as disclosed hereinbefore,
- receive from the decoder module **22** the video data **V,**
- apply predetermined conditioning settings to the synchronized multichannel audio data **A8;**
- subsequently produce a conditioned audio signal **A2'** synchronized to the video signal **V and**
- simultaneously play, on a display system **25,** only the video data **V** from the primary signal and, on a sound system **26,** only the conditioned audio signal **A2'** synchronized to the video data **V.**

The display system **25** may be or include a screen, and the sound system **26** may be or include one or more loudspeakers. In a particular embodiment, the display system **25** and sound system **26** are integrated within a same such as a TV set.

In consequence, the conditioned audio signal **A2',** synchronized to the video data **V,** is played on the sound system in lieu of the mixed audio data **A2** which is withdrawn from the primary audio/video signal **A2/V** and simply not played.

The conditioning module **24** may have the form of a computer chipo r board, or it might have the form of a software module implementedon a shared processor.

To determine the conditioning settings, there is provided a computerized (preferably mobile) user device **27** implemented with a virtual mixing table **28** including virtual buttons **29** for applying a conditioning parameter to each channel of the multichannel audio data **A8.**

The user device **27** may be a Smartphone, a tablet or even a computer, linked to the audio/video player (and more precisely to the conditioning module) through a network link **30.** This network link **30** may be wired, but it is preferably wireless, for example through a standard wireless protocol such as Wifi or Bluetooth^{®}.

In a preferred embodiment, the virtual mixing table **28** includes a virtual button **29** for each channel of the multichannel audio data **A8.** In the depicted example, the virtual mixing table **28** includes eight virtual buttons **29** (in the form of sliding buttons **29),** one for each channel of an eight channel audio data **A8.**

Conditioning settings might include, for each channel, at least a sound level (or volume). The conditioning settings are introduced manually by the viewer **3** within the virtual mixing table **28** (and are hence relayed to the conditioning module **24)** while he/she is listening to the conditioned audio signal **A2'** played on the sound system **26.**

The time delay in which conditioning settings are relayed to the audio/video player **17** through the network link **30** and subsequently applied to the multichannel audio data **A8** is imperceptible to the viewer **3,** who has therefore the sensation of an immediate (in other words, real-time) modification to the conditioned audio signal **A2'** played on the sound system **26** according to his/her settings.

Together, the audio/video player **17** and the user device **27** form an audio/video system **31** located in the viewer's premises.

Together, the audio/video player **17,** the primary audio/video server **18** and the secondary audio server **21** form an audio/video broadcasting network **32,** in which the user device **27** may be regarded as included.

Producing and playing video and audio content is achieved as follows.

There is provided the primary audio/video signal **A2/V** including the video data **V** and the mixed audio data **A2** synchronized with the video data **V.** As disclosed hereinbefore, the primary audio/video signal **A2/V** is hosted on the primary audio/video server **18** to be broadcasted to the audio/video player **17** located at the viewer's premises.

There is also provided the secondary audio signal including multichannel audio data **A8.** As disclosed hereinbefore, the secondary audio signal (or the multichannel audio data **A8)** is hosted on the secondary audio server **21** to be broadcasted to the audio/video player **17.**

As the primary audio/video signal **A2/V** is received by the audio/video player **17,** the mixed audio data **A2** is extracted therefrom by the decoder module **22,** and handed over to the synchronizing module **23.**

The multichannel audio data **A8** received by the audio/video player **17** is synchronized by the synchronizing module **23** with the mixed audio data **A2** extracted from the primary audio/video signal **A2/V,** as disclosed hereinbefore.

Conditioning settings are then applied to the synchronized multichannel audio data **A8** by the conditioning module **24** as inputted by the viewer **3** in the virtual mixing table **28** and relayed by the user device **27,** to produce the conditioned audio signal **A2',** which remains synchronized with the video data **V.**

The conditioning module **24** then hands:
o the video data **V** over to the display system **25** (such as a screen) to be played alone thereon;
o the conditioned audio data **A2'** (synchronized to the video data **V)** over to the sound system **26** (such as one or more loudspeakers) to be played alone thereon.

Accordingly, the conditioned audio data **A2',** including the settings chosen in real-time by the viewer **3** through his/her virtual mixing console **28** available on the user device **27,** replaces the mixed audio data **A2** initially broadcasted within the primary audio/video signal **A2/V,** whereby the viewer **3** is capable of adapting in real-time the conditioned audio data **A2'** played on his/her sound system **26** according to his/her preferences, even with unusual setting parameters.

The viewer's experience (and more especially the viewer's audio experience) during the broadcasting of a show is therefore enhanced.

## Claims

1. Method for producing and playing video and audio content, said method including the steps of:
• providing a primary, audio/video signal (A2/V) including video data (V) and mixed audio data (A2) synchronized with the video data (V);
• providing a secondary, audio signal including multichannel audio data (A8);
the primary audio/video signal and the secondary audio signal being captured from a show taking place in a scene and being to be broadcasted to at least one viewer's premises located distant to the scene, said primary audio/video signal and said secondary audio signal originating from a same recording source;
• receiving in said at least one viewer's premises the primary audio/video signal and extracting the mixed audio data (A2) from the primary audio/video signal (A2/V);
• receiving in said at least one viewer's premises the secondary audio signal and synchronizing the multichannel audio data (A8) from the secondary signal with the mixed audio data (A2) extracted from the audio/video primary signal (A2/V);
• applying user managed conditioning settings to the synchronized multichannel audio data (A8) to produce conditioned audio data (A2') synchronized to the video data (V);
• simultaneously playing:
∘ on a display system (25), only the video data (V) from the primary signal (A2/V);
∘ on a sound system (26), only the conditioned audio data (A2') synchronized with the video data (V), such that the conditioned audio signal (A2'), synchronized to the video data (V), is played on the sound system in lieu of the mixed audio data (A2) which is withdrawn from the primary audio/video signal (A2/V) and not played.

2. Method according to claim 1, wherein the synchronizing step includes the operations of:
• achieving a temporal comparison between the multichannel audio data (A8) from the secondary signal and the mixed audio data (A2) extracted from the primary signal (A2 /V),
• subsequently determining a time delay between the multichannel audio data (A8) from the secondary signal and the mixed audio data (A2) extracted from the primary signal (A2 /V),
• temporally aligning the multichannel audio data (A8) from the secondary signal with the mixed audio data (A2) extracted from the primary signal according to the time delay.

3. Method according to claim 1 or claim 2, wherein temporal comparison between themultichannel audio data (A8) from the secondary signal and the mixed audio data (A2) extracted from the primary audio/video signal (A8) is achieved through a maximum likelihood estimation.

4. Method according to any of the preceding claims, wherein the user managed conditioning settings are applied within a conditioning module and are obtained from a computerized user device on which a virtual mixing table (28) including virtual buttons (29) for specifying a conditioning parameter for each channel of the multichannel audio data (28) is displayed.

5. Method according to claim 4, wherein the user device (27) provides the conditioning settings to the conditioning module (24) through a wireless link (30).

6. Audio/Video player (17) for producing and playing video and audio content, including:
• a decoder module (22) configured to:
o receive a primary, audio/video signal (A2/V) including video data (V) and mixed audio data (A2) synchronized with the video data (A2) and
o extract the mixed audio data (A2) from the primary audio/video signal (A2/V);
• a synchronizing module (23) configured to
o receive a secondary, audio signal including multichannel audio data (A8), the primary audio/video signal and the secondary audio signal having been captured from a show taking place in a scene, said primary audio/video signal and said secondary audio signal originating from a same recording source, and
o synchronize the multichannel audio data (A8) from the secondary signal with the mixed audio data (A2) extracted from the primary audio/video signal (A2/V);
• a conditioning module (24) configured to:
o apply user managed conditioning settings to the synchronized multichannel audio data (A8);
o produce a conditioned audio signal (A2') synchronized to the video signal (V) and
o simultaneously play, on a display system (25), only the video data (V) from the primary audio/video signal (A2 /V) and, on a sound system (26), only the conditioned audio signal (A2') synchronized to the video data (V).

7. Audio/video system (31) including an audio/video player (17) according to claim 6, and a computerized user device (27) providing the user managed conditioning settings, said computerized user device being implemented with a virtual mixing table (28) including virtual buttons (29) for specifyying a conditioning parameter for each channel of the multichannel audio data (A8).

8. Audio/Video system (31) according to claim 7, wherein the user device (27) is in wireless communication with the audio/video player (17).

9. Audio/video broadcasting network (32) including:
• An audio/video player (17) according to claim 6;
• A primary, audio/video server (18), in network communication with the audio/video player (17) and configured to:
o host the primary, audio/video signal (A2 /V) and;
o stream the primary audio/video signal (A2/V) to the audio/video player (17) ;
• A secondary, audio server (21), separate from the primary server (A8), in network communication with the audio/video player (17) and configured to:
o host the secondary audio signal (A8) and;
o stream the secondary audio signal (A8) to the audio/video player (17).

10. Audio/video broadcasting network (32) according to claim 9, further including a computerized user device (27) according to claim 7 or 8.

## Patentansprüche

1. Verfahren zum Erzeugen und Abspielen von Video- und Audioinhalten, wobei das Verfahren die folgenden Schritte enthält:
• Bereitstellen eines primären Audio-/Videosignals (A2/V), das Videodaten (V) und gemischte Audiodaten (A2) enthält, die mit den Videodaten (V) synchronisiert sind;
• Bereitstellen eines sekundären Audiosignals, das Mehrkanal-Audiodaten (A8) enthält;
wobei das primäre Audio-/Videosignal und das sekundäre Audiosignal von einer Show erfasst werden, die in einer Kulisse stattfindet, und an von der Kulisse entfernte Räumlichkeiten mindestens eines Zuschauers übertragen werden sollen, wobei das primäre Audio-/Videosignal und das sekundäre Audiosignal von derselben Aufnahmequelle stammen;
• Empfangen des primären Audio-/Videosignals in den Räumlichkeiten des mindestens einen Zuschauers und Extrahieren der gemischten Audiodaten (A2) aus dem primären Audio-/Videosignal (A2/V);
• Empfangen des sekundären Audiosignals in den Räumlichkeiten des mindestens einen Zuschauers und Synchronisieren der Mehrkanal-Audiodaten (A8) aus dem sekundären Signal mit den gemischten Audiodaten (A2), die aus dem primären Audio-/Videosignal (A2/V) extrahiert wurden;
• Anwenden benutzerverwalteter Aufbereitungseinstellungen auf die synchronisierten Mehrkanal-Audiodaten (A8), um aufbereitete Audiodaten (A2') zu erzeugen, die mit den Videodaten (V) synchronisiert sind;
• gleichzeitig Abspielen:
o nur der Videodaten (V) aus dem primären Signal (A2/V) auf einem Anzeigesystem (25) ;
o nur der aufbereiteten Audiodaten (A2'), die mit den Videodaten (V) synchronisiert sind, auf einem Soundsystem (26), so dass das aufbereitete Audiosignal (A2'), das mit den Videodaten (V) synchronisiert ist, auf dem Soundsystem anstelle der gemischten Audiodaten (A2) abgespielt wird, die dem primären Audio-/Videosignal (A2/V) entzogen und nicht abgespielt werden.

2. Verfahren nach Anspruch 1, wobei der Synchronisierungsschritt die folgenden Vorgänge enthält:
• Erzielen eines zeitlichen Vergleichs zwischen den Mehrkanal-Audiodaten (A8) aus dem sekundären Signal und den gemischten Audiodaten (A2), die aus dem primären Signal (A2/V) extrahiert wurden,
• anschließendes Bestimmen einer Zeitverzögerung zwischen den Mehrkanal-Audiodaten (A8) aus dem sekundären Signal und den gemischten Audiodaten (A2), die aus dem primären Signal (A2/V) extrahiert wurden,
• zeitliches Ausrichten der Mehrkanal-Audiodaten (A8) aus dem sekundären Signal mit den gemischten Audiodaten (A2), die aus dem primären Signal extrahiert wurden, entsprechend der Zeitverzögerung.

3. Verfahren nach Anspruch 1 oder Anspruch 2, wobei der zeitliche Vergleich zwischen den Mehrkanal-Audiodaten (A8) aus dem sekundären Signal und den gemischten Audiodaten (A2), die aus dem primären Signal (A8) extrahiert wurden, durch eine Maximalwahrscheinlichkeitsschätzung erreicht wird.

4. Verfahren nach einem der vorhergehenden Ansprüche, wobei die benutzerverwalteten Aufbereitungseinstellungen innerhalb eines Aufbereitungsmoduls angewendet werden und von einer computergestützten Benutzervorrichtung erhalten werden, auf der ein virtuelles Mischpult (28) mit virtuellen Tasten (29) zum Spezifizieren eines Aufbereitungsparameters für jeden Kanal der Mehrkanal-Audiodaten (28) angezeigt wird.

5. Verfahren nach Anspruch 4, wobei die Benutzervorrichtung (27) die Aufbereitungseinstellungen dem Aufbereitungsmodul (24) über eine drahtlose Verbindung (30) bereitstellt.

6. Audio-/Videoplayer (17) zum Erzeugen und Abspielen von Video- und Audioinhalten, der Folgendes enthält:
• ein Decodermodul (22), das für Folgendes konfiguriert ist:
o Empfangen eines primären Audio-/Videosignals (A2/V), das Videodaten (V) und gemischte Audiodaten (A2) enthält, die mit den Videodaten (A2) synchronisiert sind, und
o Extrahieren der gemischten Audiodaten (A2) aus dem primären Audio-/Videosignal (A2/V);
• ein Synchronisierungsmodul (23), das für Folgendes konfiguriert ist:
o Empfangen eines sekundären Audiosignals, das Mehrkanal-Audiodaten (A8) enthält, wobei das primäre Audio-/Videosignal und das sekundäre Audiosignal von einer Show erfasst werden, die in einer Kulisse stattfindet, wobei das primäre Audio-/Videosignal und das sekundäre Audiosignal von derselben Aufnahmequelle stammen, und
o Synchronisieren der Mehrkanal-Audiodaten (A8) aus dem sekundären Signal mit den gemischten Audiodaten (A2), die aus dem primären Audio-/Videosignal (A2/V) extrahiert wurden;
• ein Aufbereitungsmodul (24), das für Folgendes konfiguriert ist:
o Anwenden von benutzerverwalteten Aufbereitungseinstellungen auf die synchronisierten Mehrkanal-Audiodaten (A8) ;
o Erzeugen eines aufbereiteten Audiosignals (A2'), das mit dem Videosignal (V) synchronisiert ist, und
o gleichzeitiges Abspielen nur der Videodaten (V) aus dem primären Audio-/Videosignal (A2/V) auf einem Anzeigesystem (25) und nur des aufbereiteten Audiosignals (A2'), das mit den Videodaten (V) synchronisiert ist, auf einem Soundsystem (26).

7. Audio-/Videosystem (31), das einen Audio-/Videoplayer (17) nach Anspruch 6 und eine computergestützte Benutzervorrichtung (27), die die benutzerverwalteten Aufbereitungseinstellungen bereitstellt, enthält, wobei die computergestützte Benutzervorrichtung mit einem virtuellen Mischpult (28) mit virtuellen Tasten (29) zum Spezifizieren eines Aufbereitungsparameters für jeden Kanal der Mehrkanal-Audiodaten (A8) implementiert ist.

8. Audio-/Videosystem (31) nach Anspruch 7, wobei die Benutzervorrichtung (27) in drahtloser Kommunikation mit dem Audio-/Videoplayer (17) steht.

9. Audio-/Video-Rundfunkübertragungsnetzwerk (32), das Folgendes enthält:
• einen Audio-/Videoplayer (17) nach Anspruch 6;
• einen primären Audio-/Video-Server (18), der in Netzwerkkommunikation mit dem Audio-/Videoplayer (17) steht und für Folgendes konfiguriert ist:
o Aufnehmen des primären Audio-/Videosignals (A2/V); und
o Streamen des primären Audio-/Videosignals (A2/V) zum Audio-/Videoplayer (17);
• einen sekundären Audioserver (21), der vom primären Server (A8) getrennt ist, in Netzwerkkommunikation mit dem Audio-/Videoplayer (17) steht und für Folgendes konfiguriert ist:
o Aufnehmen des sekundären Audiosignals (A8); und
o Streamen des sekundären Audiosignals (A8) zum Audio-/Videoplayer (17).

10. Audio-/Video-Rundfunkübertragungsnetzwerk (32) nach Anspruch 9, das ferner eine computergestützte Benutzervorrichtung (27) nach Anspruch 7 oder 8 enthält.

## Revendications

1. Procédé de production et de lecture de contenu vidéo et audio, ledit procédé comportant les étapes :
- fournir un signal audio/vidéo primaire (A2/V) comportant des données vidéo (V) et des données audio mélangées (A2) synchronisées avec les données vidéo (V) ;
- fournir un signal audio secondaire comportant des données audio multicanal (A8) ;
le signal audio/vidéo primaire et le signal audio secondaire étant capturés à partir d'un show ayant lieu dans une scène et devant être diffusé dans les locaux d'au moins un spectateur situés à distance de la scène, ledit signal audio/vidéo primaire et ledit signal audio secondaire provenant d'une même source d'enregistrement ;
- recevoir dans lesdits locaux de l'au moins un spectateur le signal audio/vidéo primaire et extraire les données audio mélangées (A2) du signal audio/vidéo primaire (A2/V) ;
- recevoir lesdits locaux de l'au moins un spectateur le signal audio secondaire et synchroniser les données audio multicanal (A8) provenant du signal secondaire avec les données audio mélangées (A2) extraites du signal audio/vidéo primaire (A2/V) ;
- appliquer des réglages de conditionnement gérés par l'utilisateur aux données audio multicanal synchronisées (A8) pour produire des données audio conditionnées (A2') synchronisées avec les données vidéo (V) ;
- la lecture simultanée :
- sur un système d'affichage (25), seulement les données vidéo (V) provenant du signal primaire (A2/V) ;
- sur un système sonore (26), seulement les données audio conditionnées (A2') synchronisées avec les données vidéo (V), de manière que le signal audio conditionné (A2'), synchronisé avec les données vidéo (V), soit lu sur le système sonore à la place des données audio mélangées (A2) qui sont retirées du signal audio/vidéo primaire (A2/V) et ne sont pas lues.

2. Procédé selon la revendication 1, dans lequel l'étape de synchronisation comporte les opérations consistant à :
- accomplir une comparaison temporelle entre les données audio multicanal (A8) provenant du signal secondaire et les données audio mélangées (A2) extraites du signal primaire (A2/V),
- déterminer ultérieurement un temps de retard entre les données audio multicanal (A8) provenant du signal secondaire et les données audio mélangées (A2) extraites du signal primaire (A2/V),
- aligner temporairement les données audio multicanal (A8) provenant du signal secondaire avec les données audio mélangées (A2) extraites du signal primaire en fonction du temps de retard.

3. Procédé selon la revendication 1 ou la revendication 2, dans lequel la comparaison temporelle entre les données audio multicanal (A8) provenant du signal secondaire et les données audio mélangées (A2) extraites du signal audio/vidéo primaire (A8) est accomplie au moyen d'une estimation du maximum de vraisemblance.

4. Procédé selon l'une quelconque des revendications précédentes, dans lequel les réglages de conditionnement gérés par l'utilisateur sont appliqués dans un module de conditionnement et sont obtenus à partir d'un dispositif utilisateur informatisé sur lequel une table de mélange virtuelle (28) comportant des boutons virtuels (29) pour spécifier un paramètre de conditionnement pour chaque canal des données audio multicanal (28) est affichée.

5. Procédé selon la revendication 4, dans lequel le dispositif utilisateur (27) fournit les paramètres de conditionnement au module de conditionnement (24) par l'intermédiaire d'une liaison sans fil (30).

6. Lecteur audio/vidéo (17) pour la production et la lecture de contenu vidéo et audio, comportant :
- un module de décodeur (22) configuré pour :
- recevoir un signal audio/vidéo primaire (A2/V) comportant des données vidéo (V) et des données audio mélangées (A2) synchronisées avec les données vidéo (A2) et
- extraire les données audio mélangées (A2) du signal audio/vidéo primaire (A2/V) ;
- un module de synchronisation (23) configuré pour
- recevoir un signal audio secondaire comportant des données audio multicanal (A8), le signal audio/vidéo primaire et le signal audio secondaire ayant été capturés à partir d'un show ayant lieu dans une scène, ledit signal audio/vidéo primaire et ledit signal audio secondaire provenant d'une même source d'enregistrement, et
- synchroniser les données audio multicanal (A8) provenant du signal secondaire avec les données audio mélangées (A2) extraites du signal audio/vidéo primaire (A2/V) ;
- un module de conditionnement (24) configuré pour :
- appliquer des réglages de conditionnement gérés par l'utilisateur aux données audio multicanal synchronisées (A8) ;
- produire un signal audio conditionné (A2') synchronisé avec le signal vidéo (V) et
- lire simultanément, sur un système d'affichage (25), seulement les données vidéo (V) provenant du signal audio/vidéo primaire (A2/V) et, sur un système sonore (26), seulement le signal audio conditionné (A2') synchronisé avec les données vidéo (V).

7. Système audio/vidéo (31) comportant un lecteur audio/vidéo (17) selon la revendication 6, et un dispositif utilisateur informatisé (27) fournissant les réglages de conditionnement gérés par l'utilisateur, ledit dispositif utilisateur informatisé étant mis en œuvre avec une table de mélange virtuelle (28) comportant des boutons virtuels (29) pour spécifier un paramètre de conditionnement pour chaque canal des données audio multicanal (A8).

8. Système audio/vidéo (31) selon la revendication 7, dans lequel le dispositif utilisateur (27) est en communication sans fil avec le lecteur audio/vidéo (17).

9. Réseau de diffusion audio/vidéo (32) comportant :
- un lecteur audio/vidéo (17) selon la revendication 6 ;
- un serveur audio/vidéo primaire (18), en communication par réseau avec le lecteur audio/vidéo (17) et configuré pour :
- héberger le signal audio/vidéo primaire (A2/V) et ;
- diffuser en continu le signal audio/vidéo primaire (A2/V) vers le lecteur audio/vidéo (17) ;
- un serveur audio secondaire (21), séparé du serveur primaire (A8), en communication par réseau avec le lecteur audio/vidéo (17) et configuré pour :
- héberger le signal audio secondaire (A8) et ;
- diffuser en continu le signal audio secondaire (A8) vers le lecteur audio/vidéo (17).

10. Réseau de diffusion audio/vidéo (32) selon la revendication 9, comportant en outre un dispositif utilisateur informatisé (27) selon la revendication 7 ou 8.
